# EUROPEAN PATENT APPLICATION

(11) **EP 4 503 406 A1**
(43) Date of publication of application: **05.02.2025**
(21) Application number: 24192570.0
(22) Date of filing: 02.08.2024
(51) Int. Cl.: H02K 15/02, H02K 15/12

(54) **ROTATING ELECTRICAL MACHINE COMPONENT FIXTURE**

(30) Priority: 02.08.2023 US 202318229306
(71) Applicant: American Axle & Manufacturing, Inc., Detroit, MI 48211 (US)
(72) Inventor: Jezowski, Tyler D., Farmington Hills, 48336 (US); Waineo, Bryan N., Northville, 48168 (US); Elinski, Jeffrey R., Westland, 48185 (US)
(74) Representative: Bird & Bird LLP - Hamburg

(57) **Abstract**

A fixture for forming components of a rotating electrical machine that includes a main body defining a cavity, having a closed end, configured to receive a stack-up of metal plates forming a rotor or a stator; an end cap assembly, removably coupled to an open end of the cavity, having at least one spring that applies force in an axial direction toward the closed end of the main body; and an inductive heating system having an inductive loop that receives electrical current from a source and heats the metal plates.

## Description

### TECHNICAL FIELD

The present application relates to rotating electric machines and, more particularly, to the manufacture of components included in the machines.

### BACKGROUND

Rotating electrical machines, sometimes referred to as electric motors, typically include a stator having stator windings that receive electrical current and a rotor that is angularly displaced relative to the stator in response to the electrical current. The stator and rotor can be formed in a variety of different ways. For instance, the stator and/or the rotor can be an assembly of a plurality of thin steel plates that are stacked along an axis and bonded together to create a unitary structure. However, the assembly of plates can involve a number of challenges. The alignment of the plates and bonding together of the plates can involve an extended period of time. It would be helpful to increase the speed and accuracy of stator/rotor assembly creation.

### SUMMARY

In one implementation, a fixture for forming components of a rotating electrical machine includes a main body defining a cavity, having a closed end, configured to receive a stack-up of metal plates forming a rotor or a stator; an end cap assembly, removably coupled to an open end of the cavity, having at least one spring that applies force in an axial direction toward the closed end of the main body; and an inductive heating system having an inductive loop that receives electrical current from a source and heats the metal plates.

In another implementation, a fixture for forming components of a rotating electrical machine includes a main body defining a cavity configured to receive a stack-up of metal plates forming a rotor or a stator; a closed end coupled to an end of the cavity; an end cap assembly, removably coupled to an opposite end of the cavity, having a plurality of springs carried by adjustable studs that apply force in an axial direction toward the closed end of the main body; and an inductive heating system having an inductive loop that receives electrical current from a source and heats the metal plates.

### BRIEF DESCRIPTION OF THE DRAWINGS

Figure 1 is a perspective view depicting an implementation of a rotating electrical machine component fixture;

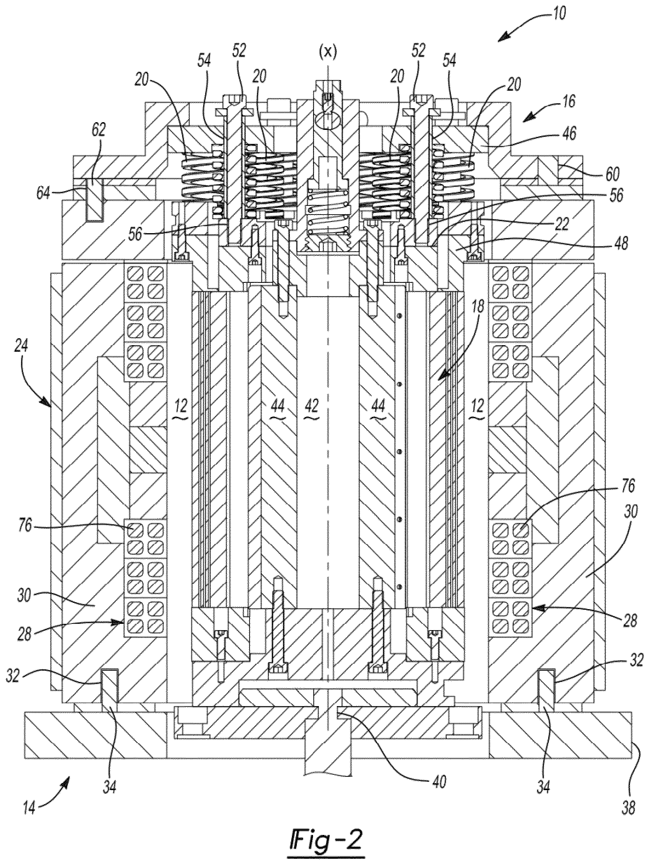

Figure 2 is a cross-sectional view depicting an implementation of a rotating electrical machine component fixture; and

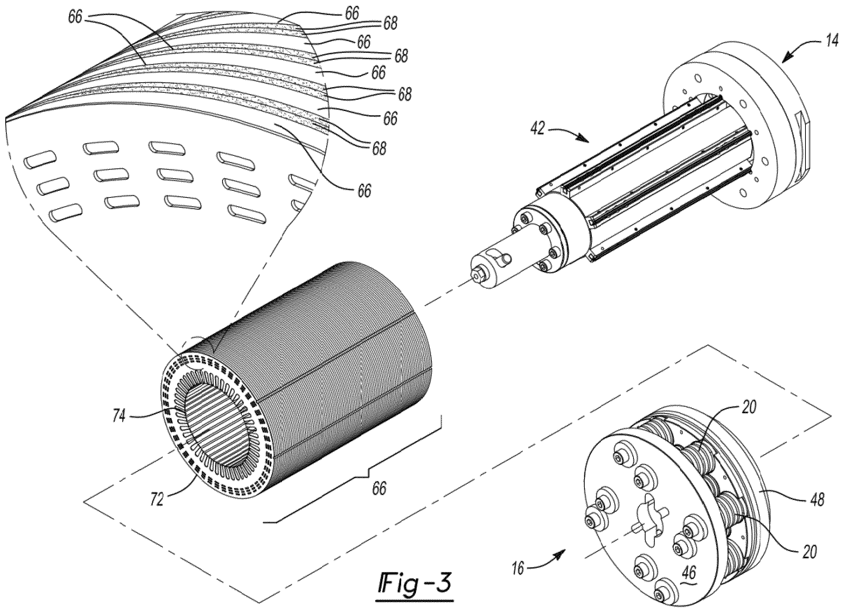

Figure 3 is an exploded view depicting a portion of an implementation of a rotating electrical machine component fixture.

### DETAILED DESCRIPTION

A rotating electric machine fixture includes a cavity for releasably receiving a plurality of thin plates, an inductive heating system, and an axially-directed force that collectively form a rotor or stator assembly from the plates. Rotating electrical machines, or electric motors, commonly include rotors and/or stators that are formed from a stack-up of thin metal plates having apertures and/or outer boundaries that collectively define the shape of the rotor/stator. The plates can include an adhesive layer that is electrically insulating applied to a surface. In the past, the stack-up of axially extending plates, including the adhesive layers, has been placed in a convection oven, heated for an extended amount of time to activate the adhesive, and ultimately removed from the oven as a unitary structure. However, the length of cure time for the plates in the convection oven may be multiple hours, hindering large scale production of rotating electric machine components.

After a stack-up of metal plates has been assembled on a mandrel, the rotating electric machine fixture can receive the stack-up of plates within a cavity that is closed at one end. An end cap assembly can be releasably attached to another end of the fixture so as to enclose the stack-up of metal plates within the cavity during the curing process. The end cap assembly can include one or more biasing elements (springs) that, when the assembly is secured to an end of the fixture, compress the stack-up of plates between the closed end of the fixture and the end cap assembly. The spring(s) can be individually tuned to adjust the amount and location of force applied axially to the stack-up of plates. The inductive heating system can be included with the walls of the fixture, radially outwardly from the stack up of plates. The system can include at least one induction coil positioned adjacent to or within the walls of the fixture. A control system can regulate the application of alternating current (AC) to the induction coil thereby inducing eddy currents within the metal plates of the stack-up. Unlike the convection oven approach that relies on the slow inward conduction of heat via atmospheric gas surrounding the surface of the stack-up, the induction coil heats the stack-up of metal plates from within the rotor/stator itself and as a result increases the evenness and speed with which the rotor/stator is cured. Rather than hours, a stack-up of plates can be cured in minutes. Once cured into a unitary element of a rotating electrical machine, the end cap assembly can be detached from the fixture in a way that releases the applied axial pressure applied and the rotor/stator can be removed from the open end of the fixture.

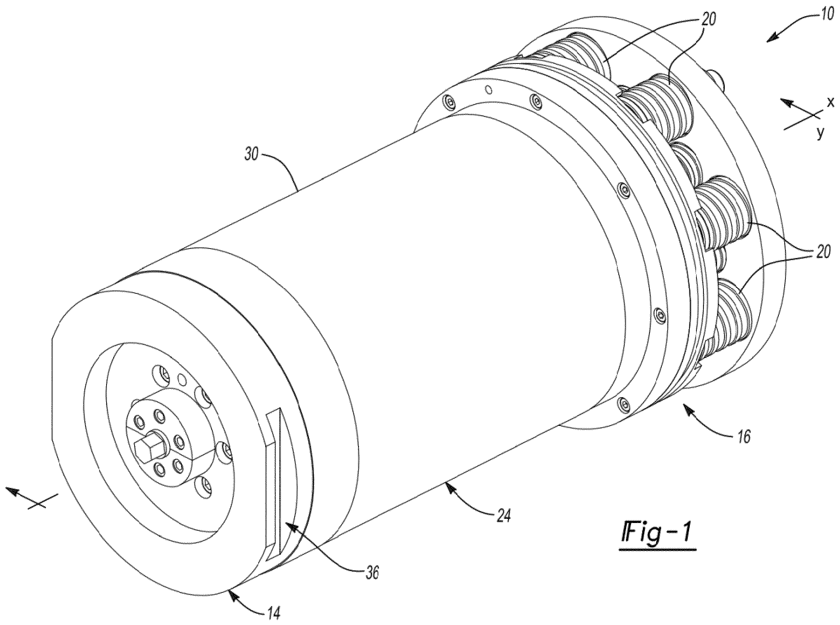

An implementation of a rotating electric machine fixture 10 is shown in Figure 1. The fixture 10 includes an inner cavity 12, a closed end 14, and an end cap assembly 16 that selectively encloses a stack-up 18 of thin metal plates that ultimately form a rotor or stator within the inner cavity 12. The end-cap assembly 16 includes one or more springs 20 that adjustably apply force to a radial surface 22 of the stack-up 18 toward the closed end 14.

The fixture 10 can include a main body 24 extending between the closed end 14 and the end cap assembly 16. The main body 24 can be substantially tubular in shape with a cavity 12 that is cylindrical. The main body 24 can be formed from metal and have a thickness sized to enclose an inductive heating system 28. In this implementation, the inductive heating system 28 can be enclosed within the walls 30 of the main body 24. However, it should be appreciated that in other implementations the inductive heating system can be positioned adjacent an outer surface of the main body 24. The main body 24 can include threaded receptacles 32 that can receive threaded fasteners 34, such as bolts, that couple the closed end 14 and the end cap assembly 16 to the fixture 10. The closed end 14, in this embodiment, can be an element that is separate from the main body 24 and coupled to the body 24 via the threaded fasteners 32. However, other implementations are possible in which the closed end is integral with the main body. The closed end 14 can include grooves 36 formed in an outer surface. The grooves 36 can mate with a base 38 that orients the fixture 10 vertically. The closed end 14 can include an aperture 40 for receiving an end of a mandrel 42 that holds and positions a stack-up of plates 18 while it is in the cavity 12. The closed end 14 can be formed from a material that is inductive and conductive such that the inductive heating system 28 heats the closed end 14. In one implementation the closed end 14 is formed from a ferrous material, such as steel.

The end cap assembly 16 releasably couples to an end of the main body 24 distal to the closed end 14. The assembly 16 includes a back plate 46, a pressure plate 48, and a plurality of springs 20 positioned in between the plates 46, 48. Each spring 20 can be carried by an adjustable stud 52 that varies the amount of force exerted by the pressure plate 48 on the stack-up of metal plates 18 that will become a rotor or a stator. The studs 52 pass through apertures 54 in the back plate 46 and the center of the spring 20 to engage threaded apertures 56 in the pressure plate 48. The tightening or loosening of the studs 52 relative to the pressure plate 48 can change the length of the studs 52, as well as the distance between the back plate 46 and the pressure plate 48. The increase/decrease in distance between the plates 46, 48 can also increase or decrease the amount of force applied by the end cap assembly 16 on the stack-up of plates 18. Each spring 20 can be adjusted individually and independent of the other springs 20. This may be helpful with managing the formation of individual features of the stack-up 18, such as stator slots or the back iron of the stator. The springs 20 can be implemented as coil springs but other elastic elements or force generating elements are possible. The term "spring," as it is used in the claims, is intended to be interpreted broadly such that it encompasses elements other than springs and could be used interchangeably with the term "force generating element." A center aperture 40 can be included in the end cap assembly 16 to receive the other end of the mandrel 42 holding the stack-up of metal plates 18 to position the stack-up within the cavity 28.

In this implementation the end cap assembly 16 includes a pivot 60 that pivotably moves the assembly 16 to open and close the cavity 12 facilitating the introduction and removal of the stack-up of plates 18. When open, the end cap assembly 16 rotates about the pivot 60 to open the cavity 12 at one end and, when closed, the end cap assembly 16 rotates about the pivot 60 to close the cavity 12. In a closed position, the end cap assembly 16 can be coupled to the main body 24 with a threaded fastener 62 that is received by a threaded receptacle 64 in the main body 24. The pressure plate 48 of the end cap assembly 16 can abut and exert a defined amount of axially directed pressure on the stack up of metal plates 18 while the end cap assembly 16 is in the closed position. The stack-up of metal plates 18 can be compressed in between the pressure plate 48 and the closed end 14. The end cap assembly 16 can be formed from a material that is inductive and conductive such that the inductive heating system 28 heats the assembly 16. In one implementation the closed end 14 is formed from a ferrous material, such as magnetic steel. In general, the top and bottom of the fixture directly abuts the stack-up of plates 18 and can include magnetic steel. However, other portions of the fixture are generally not magnetic and therefore are not heated in response to the flow of electrical current through the induction coil.

The stack-up 18 can include a plurality of metal plates 66 axially arranged on the mandrel 42 so that the surfaces of the plates abut each other. Each plate can include an adhesive coating 68 on each side. The plates 66 can be stacked uniformly so that the adhesive coatings 68 abut each other. The insulating coating 68 can be electrically, and optionally thermally insulating. The adhesive coating 68 can be implemented as any one of a variety of heat-activated adhesives. In one implementation, the adhesive coating 68 can be an epoxy preimpregnated with a heat-activated resin that hardens above a particular temperature. The mandrel 42 can be a cylindrical rod that is radially moveable or tapered such that it can releasably hold the metal plates 66 using an inner diameter of the stack-up as a contact point. The metal plates 66 can be stamped from a ferrous material, such as steel, and have both an outer diameter 72 and an inner diameter 74. Apertures may be formed in between the outer and inner diameter such that, when the plates 66 are axially stacked, adjacent apertures may form cooling pathways that can flow fluid through the rotor/stator. The shape of the outer or inner diameter of the plates 66 can be controlled to create features of the rotor or stator such as stator slots or voids that can receive rotor magnets. In one implementation, a stack-up of 500 metal plates each plate having a thickness of 1.0 millimeter (mm) can be axially stacked on a mandrel such that the adhesive and insulating coatings abut and the plates are prevented from moving relative to the mandrel. An end of the mandrel 42 can be received by the aperture 40 in the closed end 14, another end of the mandrel 42 can be received by the center aperture 40 in the end cap assembly 16, and the end cap assembly 16 can be coupled to the main body 24.

The inductive heating system 28 can include an inductive coil 76 that receives AC electrical current from a source, such as an electrical grid (not shown). The inductive coil 76 may include one or more electrical wires surrounding the cavity that are electrically linked to the grid. The cross-sectional size of the wire and number of turns is variable and can be selected based on a number of factors. A control system (not shown) including one or more switches can selectively permit the flow of electrical current through the inductive coil 76 to create a magnetic field and induce eddy currents in each of the metal plates 66 of the stack-up 18. The electrical current can be single-phase or three-phase AC. The flow of electrical current through the inductive coil 76 can heat each of the metal plates 66 within the stack-up by virtue of the induced eddy currents. In addition to heating the plates 66, the inductive heating system 28 can also induce heat in the closed end 14 and the end cap assembly 16 thereby applying heat to a radial surface of the rotor or stator. In one implementation, the amount of time that passes from initially flowing electrical current through the inductive coil until the rotor or stator cures is less than five minutes and the fixture reaches temperatures somewhere between 220-260°C.

It is to be understood that the foregoing is a description of one or more embodiments of the invention. The invention is not limited to the particular embodiment(s) disclosed herein, but rather is defined solely by the claims below. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims.

As used in this specification and claims, the terms "e.g:," "for example," "for instance," "such as," and "like," and the verbs "comprising," "having," "including," and their other verb forms, when used in conjunction with a listing of one or more components or other items, are each to be construed as openended, meaning that the listing is not to be considered as excluding other, additional components or items. Other terms are to be construed using their broadest reasonable meaning unless they are used in a context that requires a different interpretation.

## Claims

1. A fixture for forming components of a rotating electrical machine, comprising:
a main body defining a cavity, having a closed end, configured to receive a stack-up of metal plates forming a rotor or a stator;
an end cap assembly, removably coupled to an open end of the cavity, having at least one spring that applies force in an axial direction toward the closed end of the main body; and
an inductive heating system having an inductive loop that receives electrical current from a source and heats the metal plates.

2. The fixture recited in claim 1, wherein the stack-up of metal plates are carried by a mandrel that engages with the closed end.

3. The fixture recited in claim 1, wherein the stack-up of metal plates includes metal plates having an adhesive coating on each side of the plates.

4. The fixture recited in claim 1, wherein the stack-up of metal plates include apertures between an inner diameter of the plates and an outer diameter of the plates.

5. The fixture recited in claim 1, wherein the stack-up of metal plates includes an adhesive coating comprising epoxy.

6. The fixture recited in claim 1, further comprising one or more adjustable stud(s) that control an amount of force exerted by the spring(s).

7. The fixture recited in claim 1, further comprising grooves formed in an outer surface of the fixture that are configured to engage a base that holds the fixture vertically.

8. The fixture recited in claim 1, further comprising a pivot linking the end cap assembly with the main body.

9. The fixture recited in claim 1, wherein:
the closed end is coupled to an end of the cavity;
the end cap assembly is removably coupled to the open end at an opposite end of the cavity to the closed end, and the at least one spring is carried by adjustable studs so as to apply the force in an axial direction toward the closed end of the main body.

10. The fixture recited in claim 9, wherein the stack-up of metal plates are carried by a mandrel that engages with the closed end.

11. The fixture recited in claim 9, wherein the stack-up of metal plates includes metal plates having an adhesive coating on each side of the plates.

12. The fixture recited in claim 9, wherein the stack-up of metal plates include apertures between an inner diameter of the plates and an outer diameter of the plates.

13. The fixture recited in claim 9, wherein the stack-up of metal plates includes an adhesive coating comprising epoxy.

14. The fixture recited in claim 9, further comprising grooves formed in an outer surface of the fixture that are configured to engage a base that holds the fixture vertically.

15. The fixture recited in claim 9, further comprising a pivot linking the end cap assembly with the main body.
